(19) Europäisches Patentamt
European Patent Office
Office européen des brevets

(11) **EP 1 304 361 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**19.03.2014   Patentblatt 2014/12**

(45) Hinweis auf die Patenterteilung:
**28.12.2005   Patentblatt 2005/52**

(21) Anmeldenummer: **02022245.1**

(22) Anmeldetag: **02.10.2002**

(51) Int Cl.:
***C09C 1/30*** (2006.01)

(54) **Verfahren zur Herstellung von Kieselsäure mit homogener Silyliermittelschicht**

Method for Producing Silica with homogenous silylating agent coating

Procédé de Préparation de Silice avec surface couverte d'une façon homogène d'agents de silylation

(84) Benannte Vertragsstaaten:
**BE DE FR GB**

(30) Priorität: **12.10.2001   DE 10150274**

(43) Veröffentlichungstag der Anmeldung:
**23.04.2003   Patentblatt 2003/17**

(73) Patentinhaber: **Wacker Chemie AG**
**81737 München (DE)**

(72) Erfinder:
• **Barthel, Herbert, Dr.**
**84547 Emmerting (DE)**
• **Heinemann, Mario, Dr.**
**84489 Burghausen (DE)**
• **Altenbuchner, August**
**5121 St. Radegund (AT)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
EP-A- 0 686 676    EP-A- 0 860 478
EP-A- 1 204 006    EP-A- 1 236 773
EP-A1- 0 924 269    EP-A2- 0 783 021

Bemerkungen:
Die Akte enthält technische Angaben, die nach dem Eingang der Anmeldung eingereicht wurden und die nicht in dieser Patentschrift enthalten sind.

EP 1 304 361 B2

**Beschreibung**

Die Erfindung betrifft ein Verfahren zur Herstellung einer silylierten Kieselsäure.

Bekannt ist aus EP 0686 676, Wacker-Chemie, die Hydrophobierung von Kieselsäure mit (1) einem flüchtigen und (2) einem flüssigen, schwerflüchtigen Silyliermittel, durch Zugabe mindestens eines der Silyliermittel als feinstverteiltes Aerosol.

Der Vorteil dieser Vorgehensweise ist eine hohe Verdickungswirkung dieser Kieselsäure.

Ein Nachteil dieser Vorgehensweise ist eine komplexe Reaktionsführung, d.h. es ist erforderlich mit mindestens zwei verschiedenen Silyliermitteln zu arbeiten, von denen eines als-Flüssigkeit, und das andere als Dampf zu applizieren ist. Dies erfordert einen hohen verfahrenstechnischen Aufwand, der kostenintensive Gerätetechnologie und Prozesssteuerung erforderlich macht. Das dort beschriebene Verfahren erzielt Ausbeuten, die deutlich kleiner als 100% sind.

EP1204006 A offenbart ein Verfahren zur Beschichtung von Kieselsäuren unter Verwendung von Organopolysiloxanen (u.a. auch Polydimethylsiloxanen) als Beschichtungsmittel zwecks Hydrophobierung besagter Kieselsäuren. Das Organosiloxan wird bei Temperaturen von 200°C - 210°C zur Reaktion gebracht. Sowohl mit alkoholischen Gruppen modifizierte Siliconöle, sowie Alkylgruppen modifizierte Siliconöle können verwendet werden.

Bereits bekannte Verfahren (s.o.) zur Belegung von Kieselsäure mit Organosiliciumverbindungen beruhen nach dem Stand der Technik auf der kontrollierten Zugabe von Silyliermittel. Dies setzt voraus, dass die Silyliermittel ausreichende Reaktivität aufweisen. Dies ist im allgemeinen der Fall, wenn diese Silyliermittel am Siliciumatom reaktive Gruppen aufweisen, wie bekanntermaßen Halogenid-Reste (Cl, Br), Alkoxy-Reste (OR) oder Amino-Reste (-N-R) oder Silazanreste (-N-Si-). Dies ist zum einen ein kostenintensives Vorgehen, da die o.g. Silyliermittel nur unter hohen Herstellungskosten zugänglich sind. Zum anderen führt die hohe Reaktivität der o.g. Silyliermittel dazu, dass diese während der Reaktion auch unkontrolliert untereinander reagieren können - dies führt zu unerwünschten Nebenreaktionen und Nebenreaktionsprodukten. Ein weiterer schwerwiegender Nachteil ist bei o.g. Silyliermitteln die Entwicklung von Abspaltprodukten aus der funktionellen Gruppe wie Halogenwasserstoffe, Alkohole, Amine oder Ammoniak. Dies führt zu Korrosionsproblemen, und damit zu zusätzlichen Kosten für Spezialwerkstoffe und eine erhöhte Reinigung, und zu Umweltbelastung bzw./und aufwendigen Abgas- und Abwasserreinigungsoperationen, die kostenintensiv sind.

Aufgabe der Erfindung ist es, die Nachteile des Standes der Technik zu überwinden.

Überraschenderweise wurde nun gefunden, dass unter den erfindungsgemäßen Bedingungen und unter Einsatz erfindungsgemäßer Silyliermittel, eine exzellente Silylierung erzielt werden kann, ohne Abspaltung toxischer Abspaltprodukte, unter Vermeidung von unerwünschten Nebenreaktionen und zugleich unter Bildung einer homogenen Silyliermittelschicht.

Gegenstand der Erfindung ist ein Verfahren zur Herstellung einer silylierten Kieselsäure, wobei als Basis-(Ausgangs-)-Produkt zur Silylierung eine hydrophile pyrogene Kieselsäure verwendet wird, dadurch gekennzeichnet, dass die Kieselsäure mit einem

**Organosiloxan** aufgebaut aus A Einheiten der Formel (I)

$$(R^1_3SiO_{1/2}) \qquad (I)$$

und B Einheiten der Formeln (IIa-c)

$$(R^1_2SiO_{2/2}), \qquad (IIa)$$

und/oder

$$(R^1SiO_{3/2} , \qquad (IIb)$$

und/oder

$$(SiO_{4/2}) \qquad (IIc)$$

silyliert wird,

wobei das Organosiloxan an Si-Atomen 1 oder 2 gebundene Gruppen -X enthalten kann, und

X = OZ, wobei Z ein einwertiger Alkylrest mit 1 - 4 C-Atomen, wie vorzugsweise Methyl oder Ethyl-Reste, oder Z = Wasserstoff ist, oder X ein Halogen ist, oder X eine Acetoxygruppe, $R^1$ ist ein gegebenenfalls einfach oder mehrfach ungesättigter, einwertiger, gegebenenfalls halogenierter, Kohlenwasserstoffrest mit 1 bis 18 C-Atomen,

und dabei gleich oder verschieden sein kann,

wobei das Organosiloxan die Gruppen =SiX oder =SiX$_2$ in einer Anzahl C aufweisen kann und

für A, B und C gilt:

$$1 \leq B \leq 100 \text{ oder } 750 < B < 10000$$

in einer bevorzugten Ausführung $10 \leq B \leq 50$ und besonders bevorzugt $10 \leq B \leq 20$ ist

und in einer anderen bevorzugten Ausführung $1000 \leq B \leq 5000$ ist $B \geq A + C$, bevorzugt $B > A + C$, besonders bevorzugt $B > 2 \times (A + C)$

und für $A + C = 0$ gilt $10 \leq B \leq 100$ oder $750 < B < 10000$, wobei vorzugsweise $A + C \leq 20$ und besonders bevorzugt $A + C < 2$. Das Verhältnis von A zu C ist ansonsten beliebig.

Z ist bevorzugt Wasserstoff.

Besonders bevorzugt ist mindestens eine ketten-endständige Hydroxylgruppe am Si-Atom (eine sogenannte endständige Silanolgruppe =SiOH).

In einer anderen Ausführung ist mindestens eine ketten-endständige Trimethylsiloxygruppe am Si-Atom (eine sogenannte endständige Trimethylsiloxygruppe $\equiv$SiOSi(CH$_3$)$_3$) bevorzugt.

Bevorzugt sind solche Organosiloxane, die über 80 Mol% an $R^1_2SiO_{2/2}$ Einheiten aufweisen.

$R^1$ ist ein gegebenenfalls einfach oder mehrfach ungesättigter, einwertiger, gegebenenfalls halogenierter, Kohlenwasserstoffrest mit 1 bis 18 C-Atomen,

der gleich oder verschieden sein kann.

Die Organosiloxane sind bevorzugt bei Belegungstemperatur flüssig.

Beispiele für $R^1$ sind Alkylreste wie der Methylrest, der Ethylrest, Propylreste wie der iso- oder der n-Propylrest, Butylreste wie der t- oder n-Butylrest, Pentylreste wie der neo-Pentylrest, die iso-Pentylreste oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenylyl- oder Naphthenylrest, Alkylarylreste wie Benzyl-, Ethylphenyl-, Toluyl- oder die Xylylreste, halogenierte Alkylreste wie der 3-Chlorpropyl-, der 3,3,3-Trifluorpropyl oder der Perfluorhexylethylrest, halogenierte Arylreste wie der Chlorphenyl oder Chlorbenzylrest.

Bevorzugte Beispiele für $R^1$ sind der Methylrest, der Octylrest und der Vinylrest, besonders bevorzugt ist der Methylrest.

Beipiele für Organosiloxane sind lineare oder cyclische Dialkylsiloxane mit einer mittleren Anzahl an Dialkylsiloxyeinheiten von über 2, bevorzugt über 10. Die Dialkylsiloxane sind bevorzugt Dimethylsiloxane. Beispiele für lineare Polydimethylsiloxane sind solche mit den Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy; besonders bevorzugt sind Trimethylsiloxy und Dimethylhydroxysiloxy.

Die Endgruppen können gleich oder unterschiedlich sein.

In einer bevorzugten Ausführung sind unter den genannten Polydimethylsiloxanen solche mit den Endgruppen Trimethylsiloxy und einer Viskosität bei 25 °C von kleiner gleich 0,15 Pa·s (und einem Molekulargewicht von kleiner gleich 5000 Dalton) bevorzugt, besonders bevorzugt ist eine Viskosität von kleiner gleich 0,05 Pa·s (und einem Molekulargewicht von kleiner gleich 1500 Dalton).

In einer anderen bevorzugten Ausführung sind unter den genannten Polydimethylsiloxanen solche mit den Endgruppen Dimethylhydroxysiloxy mit einer Viskosität bei 25 °C kleiner 0,1 Pa·s bevorzugt, besonders bevorzugt mit einer Viskosität kleiner 0,05 Pa·s. Inbesondere werden Polydimethylsiloxane mit den Endgruppen Dimethylhydroxysiloxy eingesetzt mit Gehalten an Hydroxylgruppen am Si-Atom (Silanolgruppen $\equiv$SiOH) von größer 1,5 Gew.%, bevorzugt von größer 3 Gew.%, und besonders bevorzugt größer 4,5 Gew.%.

In einer weiteren bevorzugten Ausführung sind unter den genannten Polydimethylsiloxanen solche mit den Endgruppen Trimethylsiloxy mit einer Viskosität bei 25 °C von vorzugsweise größer gleich 50 Pas (entsprechend einem Molekulargewicht von größer gleich 50000 Dalton), besonders bevorzugt von größer gleich 100 Pas (entsprechend einem Molekulargewicht von größer gleich 75000 Dalton) bevorzugt.

Herstellung der Ausgangskieselsäure

Die Kieselsäure hat vorzugsweise eine mittlere Primärteilchen-Partikelgröße kleiner als 100 nm, bevorzugt mit einer mittleren Primärteilchen-Partikelgröße von 5 bis 50 nm.

Diese Primärteilchen existieren nicht isoliert in der Kieselsäure, sondern sind Bestandteile größerer Aggregat und Agglomerate.

Vorzugsweise weist die Kieselsäure eine spezifische Oberfläche von 25 bis 500 m$^2$/g (gemessen nach der BET Methode nach DIN 66131 und 66132) auf.

Die Kieselsäure weist Aggregate (Definition nach DIN 53206) im Bereich eines Durchmessers von 100 bis 1000 nm auf, wobei die Kieselsäure aus Aggregaten aufgebaute Agglomerate (Definition nach DIN 53206) aufweist, die in Abhängigkeit von der äußeren Scherbelastung (z.B. Meßbedingungen) Größen von 1 bis 500 $\mu$m aufweisen.

Vorzugsweise weist die Kieselsäure eine fraktale Dimension der Oberfläche von vorzugsweise kleiner oder gleich 2,3 auf, bevorzugt von kleiner oder gleich 2,1, besonders bevorzugt von-1,95 bis 2,05, wobei die fraktale Dimension der Oberfläche $D_s$ hierbei definiert ist als:

Partikel-Oberfläche A ist proportional zum Partikel-Radius R hoch $D_s$

Vorzugsweise weist die Kieselsäure eine fraktale Dimension der Masse $D_m$ von vorzugsweise kleiner oder gleich als 2,8, bevorzugt gleich oder kleiner 2,7, besonders bevorzugt von 2,4 bis 2,6 auf. Die fraktale Dimension der Masse $D_m$ ist hierbei definiert als:

Partikel-Masse M ist proportional zum Partikel-Radius R hoch $D_m$.

Vorzugsweise weist die Kieselsäure eine Dichte an Oberflächen-Silanolgruppen SiOH von kleiner als 2,5 SiOH / $nm^2$, vorzugsweise kleiner 2,1 SiOH / $nm^2$, bevorzugt von kleiner als 2 SiOH / $nm^2$, besonders bevorzugt von 1,7 bis 1,9 SiOH / $nm^2$ auf.

Es können bei hoher Temperatur (größer 1000 °C) hergestellte Kieselsäuren eingesetzt werden. Es können auch hydrophile Kieselsäuren eingesetzt werden, die frisch hergestellt direkt aus dem Brenner kommen, zwischengelagert oder bereits handelsüblich verpackt sind. Es können auch hydrophobierte Kieselsäuren z.B. handelsübliche, eingesetzt werden.

Es können unverdichtete, mit Schüttdichten kleiner 60 g/l, aber auch verdichtete, mit Schüttdichten größer 60 g/l, Kieselsäuren eingesetzt werden.

Als Basis-(Ausgangs-)-Produkt zur Silylierung wird eine hydrophile pyrogene Kieselsäure eingesetzt, die unter wasserfreien Bedingungen hergestellt wird. Unter wasserfrei ist hierbei zu verstehen, dass weder im hydrothermalen Herstellungs-Prozess noch in den weiteren Schritten des Prozesses, wie Abkühlung, Reinigung und Lagerung, bis zum fertigen und gereinigten, verpackten und versandfertigen Produkt kein zusätzliches Wasser in den Prozess zugeführt wird, weder in flüssiger noch in dampfförmiger Form. Es wird dabei jedenfalls nicht mehr als 5 Gew.% Wasser bezogen auf das gesamte Gewicht der Kieselsäure zugegeben, vorzugsweise wird so wenig Wasser wie möglich, besonders bevorzugt überhaupt kein Wasser zugegeben.

Es können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

Als Silyliermittel zur Herstellung der silylierten Kieselsäure wird das oben beschriebene Organosiloxan verwendet.

- Es werden vorzugsweise mehr als 1,5 Gew.% Silyliermittel, bevorzugt mehr als 3 Gew.% Silyliermittel, besonders bevorzugt mehr als 5 Gew.% Silyliermittel, ganz besonders bevorzugt mehr als 10 Gew.% pro einer eingesetzten KIESELSÄURE-Oberfläche von 100 $m^2$/g BET-Oberfläche (gemessen nach der BET Methode nach DIN 66131 und 66132) eingesetzt.
- Die Silylierung kann als diskontinuierliche Reaktion, d.h. im Batch-Verfahren, oder als kontinuierliche Reaktion durchgeführt werden. Aus technischen Gründen bevorzugt ist eine kontinuierliche Reaktion.
- Die Reaktion kann in einem Schritt realisiert werden, oder in 2 oder 3 aufeinanderfolgenden Schritten. Das heißt, der Reaktion kann eine Beladung (Physisorption des Silyliermittels) vor- sowie der Reaktion ein Reinigungsschritt nachgeschaltet sein. Bevorzugt sind 3 sukzessive Schritte: (1) Beladung - (2) Reaktion - (3) Reinigung.
- Die Beladungstemperatur liegt bei vorzugsweise -30°C bis 350°C, bevorzugt 20°C bis 300°C, besonders bevorzugt 20°C - 120 °C.
- Die Reaktionstemperaturen reichen vorzugsweise von 200 bis 400 °C, bevorzugt 250°C bis 350°C, besonders bevorzugt von 280 bis 330 °C.
- Die Reaktionszeiten dauern von vorzugsweise 1 Min bis 24 h, bevorzugt 10 Min bis 8 h, besonders bevorzugt 30 Min bis 4 h.
- Der Reaktionsdruck liegt im Bereich des Normaldrucks, eines Überdrucks bis 10 bar, wobei auch ein Unterdruck von bis 0,2 bar möglich ist.
- Die Reinigungstemperatur reicht vorzugsweise von 100 bis 400 °C, bevorzugt 250°C bis 350°C, besonders bevorzugt von 290 bis 340 °C.
- Eine effektive Bewegung und Durchmischung von KIESELSÄURE und Silyliermittel ist notwendig. Dies erfolgt bevorzugt durch eine mechanische oder gasgetragene Fluidisierung. Eine gasgetragene Fluidisierung kann durch alle inerten Gase erfolgen, die nicht mit dem Silyliermittel, der KIESELSÄURE, der silylierten KIESELSÄURE und Nebenreaktionsprodukten reagieren, also nicht zu Nebenreaktionen, Abbaureaktionen, Oxidationsvorgängen und Flammen- und Explosionserscheinungen führen: wie $N_2$, Ar, andere Edelgase, $CO_2$, etc. Die Zuführung der Gase zur Fluidisierung erfolgt bevorzugt im Bereich von Leerrohrgasgeschwindigkeiten von 0,05 bis 5 cm/s, besonders bevorzugt von 0,05 - 1 cm/s. Mechanische Fluidisierung kann durch Flügelrührer, Ankerrührer, und sonstige geeignete Rührorgane erfolgen.

- In einer besonders bevorzugten Ausführung wird nur die Gasmenge zugeführt, die zur Aufrechterhaltung einer sauerstoffarmen Atmosphäre ausreicht, wobei bevorzugt weniger als 10 Vol.% zugeführt werden, was ausreicht, und die Fluidisierung erfolgt dann rein mechanisch.

- Die Reaktion wird bevorzugt in einer Atmosphäre durchgeführt, die nicht zur Oxidation der silylierten KIESELSÄURE führt, d.h. einer sauerstoffarmen Atmosphäre, bevorzugt weniger als 10 Vol.% Sauerstoff, besonders bevorzugt sind weniger als 2,5 Vol.%, wobei beste Ergebnisse bei weniger als 1 Vol.% Sauerstoff erzielt werden.

- Es erfolgt ein effektives Einbringen der Silyliermittel in die KIESELSÄURE. Da es sich bei den Silyliermitteln bei Raumtemperatur und/oder bei Reaktionstemperatur im allgemeinen um flüssige Verbindungen handelt, werden bevorzugt effektive Verdüsungstechniken eingesetzt: Verdüsen in 1-Stoffdüsen unter Druck (5 bis 20 bar), Versprühen in 2-Stoffdüsen unter Druck (Gas und Flüssigkeit 2-20 bar), Feinstverteilen mit Atomizern , etc.

- Bevorzugt wird das Silyliermittel als feinstverteiltes Aerosol zugefügt, dadurch gekennzeichnet, dass das Aerosol eine Sinkgeschwindigkeit von vorzugsweise 0,1 - 20 cm/sek aufweist.

- Wahlweise können vorzugsweise protische Lösungsmittel hinzugefügt werden, wie flüssige oder verdampfbare Alkohole oder Wasser; typische Alkohole sind iso-Propanol, Ethanol und Methanol. Es können auch Gemische der o.g. protischen Lösemittel zugefügt werden. Bevorzugt werden keine protischen Lösemittel zugesetzt.

- Wahlweise können vorzugsweise saure oder basische Katalysatoren zugesetzt werden. Diese Abreinigungs- und Nebenreaktionsprodukte können basischen Charakters sein, im Sinne einer Lewis Base oder einer Brönsted Base, wie Ammoniak, oder sauren Charakters sein, im Sinne einer Lewis Säure oder einer Brönsted Säure, wie Chlorwasserstoff. Bevorzugt werden diese in Spuren zugesetzt, das heißt weniger als 1000 ppm. Besonders bevorzugt werden keine Katalysatoren zugesetzt.

- Der Reinigungsschritt ist durch Bewegung gekennzeichnet, wobei langsame Bewegung und geringes Durchmischen bevorzugt ist.

- Der Reinigungsschritt ist weiterhin durch einen erhöhten Gaseintrag gekennzeichnet, entsprechend einer Leerrohrgasgeschwindigkeit von 0,001 bis 10 cm/s, bevorzugt von 0,01 bis 1 cm/s.

- Zusätzlich kann der Reinigungsschritt ein Mischen mit mechanischen Rührorganen beinhalten. Die Rührorgane werden dabei so eingestellt und bewegt, dass bevorzugt Mischen und Fluidisieren, jedoch nicht völlige Verwirbelung eintritt.

- Zusätzlich können während des Silylierschrittes Verfahren zur mechanischen Verdichtung eingesetzt werden, wie zum Beispiel Presswalzen, Kugelmühlen, Kollergänge, Schraubenverdichter, Brikettierer.

- Zusätzlich können während des Silylierschrittes Verfahren zur Desagglomerierung der Kieselsäure eingesetzt werden, wie Stiftmühlen oder Vorrichtungen zur Mahlsichtung.

- Zusätzlich können im Anschluss an die Reinigungsverfahren Verfahren zur mechanischen Verdichtung der Kieselsäure eingesetzt werden, wie zum Beispiel Presswalzen, oder Verdichten durch Absaugen des Luft- oder Gasinhaltes durch geeignete Vakuummethoden oder andere Verfahren zur mechanischen Verdichtung können eingesetzt werden, wie zum Beispiel Presswalzen, Kugelmühlen, Kollergänge, Schraubenverdichter, Brikettierer.

- Zusätzlich können im Anschluss an die Reinigung Verfahren zur Desagglomerierung der Kieselsäure eingesetzt werden, wie Stiftmühlen oder Vorrichtungen zur Mahlsichtung.

- In einer bevorzugten Ausführung werden die nichtabreagierten Silyliermittel, Nebenreaktionsprodukte, nicht chemisch fixierten und gegebenenfalls veränderten Silyliermittelüberschüsse, Abreinigungsprodukte und Abgase aus dem Reinigungsschritt in geeigneten temperierten Vorrichtungen wieder in den Schritt der Belegung und Beladung der Kieselsäure zurückgeführt; dies kann teilweise oder vollständig geschehen, bevorzugt zu 50-90 % des gesamten Volumenstromes der aus der Abreinigung austretenden Gasvolumina.

Die erfindungsgemäße KIESELSÄURE weist bei Kontakt mit Wasser keine benetzbaren Anteile auf.

Die erfindungsgemäße KIESELSÄURE zeigt Unpolarität, gemessen durch Adsorption von Methylrot (siehe unten). Die erfindungsgemäße KIESELSÄURE kann nach diesen Charakteristika als unpolar bezeichnet werden.

Ein besonderes Kennzeichen der erfindungsgemäßen Kieselsäure ist, dass ihre Oberfläche chemisch homogen ist und dass die Silyliermittelreste und nicht reagierten Silanolgruppen, auch auf molekularer Skala, homogen gleichmäßig verteilt sind. Dies kann durch Benetzungstests (s. Anhang) gezeigt werden.

Die Kettenlänge der auf der Kieselsäure gebundenen Silyliermittelreste beträgt vorzugsweise weniger 10 Alkyl-Siloxyeinheiten, bevorzugt weniger als 5 Alkyl-Siloxyeinheiten pro monofunktionell gebundenem Rest bzw. weniger als 20 Alkyl-Siloxyeinheiten, bevorzugt weniger als 10 Alkyl-Siloxyeinheiten pro difunktionell gebundenem Rest. Dies kann durch T2-Relaxation-Methoden der $^1$H Festkörper-NMR gezeigt werden.

In einer bevorzugten Ausführung besitzt die erfindungsgemäße Kieselsäure eine vollständig chemisch gebundene Silyliermittelschicht (d.h. mit Tetrahydrofuran sind bei T = 25 °C weniger als 0,5 Gew.-% der siliciumorganischen Silyliermittelschicht extrahierbar; der Nachweis der extrahierten siliciumorganischen Verbindungen erfolgt vorteilhafterweise mittels Atom-Absorptions-Spektrometrie)

Die erfindungsgemäße KIESELSÄURE ist im weiteren dadurch gekennzeichnet, dass sie bei polaren Systemen, wie Lösungen, Suspensionen, Emulsionen und Dispersionen von organischen Harzen in Wasser bzw. polaren Polymeren und Harzen (z.B. : Polyester, Vinylester, Epoxidharze, Polyurethane, Acrylate, u.a.) in unpolaren Lösemitteln, wie Monostyrol, eine hohe Verdickungswirkung aufweist, und damit als rheologisches Additiv in diesen Systemen geeignet ist und eingesetzt werden kann.

Die erfindungsgemäße KIESELSÄURE ist im weiteren dadurch gekennzeichnet, dass sie bei unpolaren Systemen, wie unvernetztem Siliconkautschuk, eine geringe Verdickungswirkung aufweist, dabei zugleich aber eine hohe Verstärkungswirkung in den vernetzten Siliconkautschuken zeigt, und damit als Verstärkerfüllstoff für Siliconkautschuke hervorragend geeignet ist.

Die erfindungsgemäße KIESELSÄURE ist im weiteren dadurch gekennzeichnet, dass sie in pulverförmigen Systemen nicht zu Verbackung unter Feuchteeinfluß neigt, aber auch nicht zu Reagglomeration, und damit zur Separierung, und somit belastungsstabile und lagerstabile Mischungen der Kieselsäure mit Pulver ermöglicht. Dies gilt insbesondere für den Einsatz in nichtmagnetischen und magnetischen Tonern und Entwicklern, die 1- und 2-Komponenten Systeme sein können, sowie für den Einsatz in Beschichtungssystemen, die pulverförmig appliziert werden, wie Pulverfarben und Pulverlacke.

Vorteile:

1) Hohe Reaktionsausbeuten und damit wirtschaftlich und Ressourcen-schonend.
2) Keine Nebenreaktionen und damit eine einheitliche und homogene Silyliermittelschicht.
3) Keine Abspaltprodukte wie Halogenwasserstoffe, Alkohole oder Amine / Ammoniak aus dem Silyliermittel und somit umweltschonend und kostengünstig, da aufwendige Nachreinigungen entfallen.
4) Kostengünstige Silyliermittel.

Ein weiterer Gegenstand der Erfindung ist ein Additiv zur Steuerung der Rheologie von flüssigen und pulverförmigen Systemen, das die erfindungsgemäße Kieselsäure enthält.

Die Erfindung betrifft im allgemein den Einsatz der erfindungsgemäßen KIESELSÄURE, wobei sie als Additiv zur Steuerung der Rheologie von flüssigen und pulverförmigen Systemen verwendet wird, insbesondere in allen lösemittelfreien, lösemittelhaltigen, wasserverdünnbaren, filmbildenden Anstrichmitteln, gummiartigen bis harten Beschichtungen, Klebstoffe, Versiegelungs- und Vergussmassen sowie in anderen vergleichbaren Systemen. Sie betrifft alle Systeme von niedriger bis hoher Polarität, die als viskositätsgebende Komponente KIESELSÄURE enthalten. Sie betrifft insbesondere Systeme wie:

- Epoxidsysteme
- Polyurethansysteme (PUR)
- Vinylesterharze
- Ungesättigte Polyesterharze
- Wasserlösliche oder wasserdispergierbare Harzsysteme
- Lösemittelarme Harzsysteme, sogenannte "high solids".
- Lösemittelfreie Harze, die in Pulverform z.B. als Beschichtungsstoffe appliziert werden.

Die erfindungsgemäße KIESELSÄURE liefert als Additiv zur Steuerung der Rheologie in diesen Systemen die erforderliche notwendige Viskosität, Strukturviskosität, Thixotropie und für das Standvermögen an senkrechten Flächen eine ausreichende Fließgrenze, wobei zusätzlich noch polymere Additive mit einem Molekulargewicht von vorzugsweise 100 bis 2000 enthalten sein können, wie vorzugsweise Polyethylenglykole, Polyether, Polyamide, alkylsubstituierte Sorbitole.

Ein weiterer Gegenstand der Erfindung ist ein Füllstoff zum Verstärken von Elastomeren, der eine erfindungsgemäße Kieselsäure enthält.

Die Erfindung betrifft weiter den Einsatz der erfindungsgemäßen KIESELSÄURE als rheologisches Additiv und Füllstoff zum Verstärken von Elastomeren, vorzugsweise in unvernetzten und vernetzten Siliconsystemen, wie bei Siliconelastomeren, die aus Siliconpolymeren, wie Polydimethylsiloxanen, Füllstoffen und weiteren Additiven zusammengesetzt sind; diese können z.B. mit Peroxiden vernetzt werden, oder über Additions-Reaktionen, die sogenannte Hydrosilylierungsreaktion, zwischen olefinischen Gruppen und Si-H Gruppen vernetzt werden oder über Kondensationsreaktionen zwischen Silanolgruppen vernetzt werden. Das Additiv zum Verstärken von Elastomeren kann auch noch Quarzmehl enthalten.

Ein weiterer Gegenstand ist ein Toner oder Entwickler, der eine Kieselsäure enthält.

Die Erfindung betrifft des weiteren den Einsatz der erfindungsgemäßen Kieselsäure in Entwicklern und Toner, z.B. magnetische 1-Komponenten und 2-Komponenten Toner, aber auch nichtmagnetische Toner. Diese Toner können aus Harzen, wie Polyester-, Styrol- und Acrylharzen oder deren Mischungen bestehen, und bevorzugt zu Partikelverteilungen von 1-100 $\mu$m vermahlen sein oder können solche Harze sein, die in Polymerisationsverfahren in Dispersionen oder Emulsionen oder Lösungen oder in Masse zu Partikelverteilungen von bevorzugt 1-100 $\mu$m hergestellt werden. Die KIESELSÄURE wird bevorzugt eingesetzt zur Verbesserung und Steuerung des Pulver-Fließverhaltens, und / oder zur Regulierung und Steuerung der triboelektrischen Ladungseigenschaften des Toners oder Entwicklers. Derartige Toner und Entwickler können eingesetzt werden bevorzugt bei allen Non-Impact-Print Verfahren, wie elektrophotografischen Print- und Druckverfahren. Des weiteren sind sie auch einsetzbar bei direkten Bildübertragungsverfahren.

Beispiele

Herstellung der erfindungsgemäßen KIESELSÄURE

Beispiel 1

In einer kontinuierlichen Apparatur werden bei einer Temperatur von 25 °C unter Inertgas $N_2$ zu einem Massestrom von 1000 g/h an hydrophiler KIESELSÄURE, mit einer Feuchte < 1 Gew.% und einem HCl Gehalt < 100 ppm und mit einer spezifischen Oberfläche von 300 $m^2$/g (gemessen nach der BET Methode nach DIN 66131 und 66132) (erhältlich unter dem Namen WACKER HDK T30 bei Wacker-Chemie GmbH, Burghausen, D), 150 g/h Trimethylsiloxyendständiges PDMS (Viskosität: 100.000 mPas bei 25° C) (erhältlich unter dem Namen Siliconöl AK 100.000 bei Wacker-Chemie GmbH), gelöst im Lösemittel Tetrahydrofuran in einem Mengenverhältnis von 1 zu 10, in flüssiger, feinstverteilter Form durch Verdüsen über eine Einstoffdüse (Druck 20 bar) zugefügt. Die so beladene KIESELSÄURE wird bei 100 °C während 3 h vom Lösemittel THF befreit, und wird anschließend bei einer Verweilzeit von 2 Stunden bei einer Temperatur von 300 °C zur Reaktion gebracht. Anschließend wird unter mechanischem Rühren und Begasen mit $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit einem exzellenten Silyliergrad und einer homogenen Silyliermittelschicht. Daten in Tabelle 1.

Beispiel 2

In einer diskontinuierlichen Apparatur werden bei einer Temperatur von 25 °C unter Inertgas $N_2$ zu 100 g hydrophiler KIESELSÄURE, mit einer Feuchte < 1 Gew.% und einem HCl Gehalt < 100 ppm und mit einer spezifischen Oberfläche von 300 $m^2$/g (gemessen nach der BET Methode nach DIN 66131 und 66132) (erhältlich unter dem Namen WACKER HDK T30 bei Wacker-Chemie GmbH, Burghausen, D), 50 g Trimethylsiloxy-endständiges PDMS (Viskosität: 100.000 mPas bei 25° C) (erhältlich unter dem Namen Siliconöl AK 100.000 bei Wacker-Chemie GmbH), gelöst in Lösemittel Tetrahydrofuran, in einem Mengenverhältnis AK zu THF von 1 zu 10, in flüssiger, feinstverteilter Form durch Verdüsen über eine Einstoffdüse (Druck 20 bar), in mehreren Schritten zugefügt. Die so beladene KIESELSÄURE wird bei 100 °C während insgesamt 3 h vom Lösemittel THF befreit, und wird anschließend bei einer Verweilzeit von 2 Stunden bei einer Temperatur von 300 °C in einem Reaktor zur Reaktion gebracht, unter Zuleitung von $N_2$ unter 15-fachem Gasaustausch während der Reaktionszeit. Erhalten wird ein hydrophobes weißes KIESELSÄURE-Pulver mit exzellentem Silyliergrad. Daten in Tabelle 1.

Beispiel 3

In einer diskontinuierlichen Apparatur werden bei einer Temperatur von 25 °C unter Inertgas $N_2$ zu 100 g hydrophiler KIESELSÄURE, mit einer Feuchte < 1 Gew.% und einem HCl Gehalt < 100 ppm und mit einer spezifischen Oberfläche von 300 $m^2$/g (gemessen nach der BET Methode nach DIN 66131 und 66132) (erhältlich unter dem Namen WACKER HDK T30 bei Wacker-Chemie GmbH, Burghausen, D), 30 g Trimethylsiloxy-endständiges PDMS (Viskosität: 1.000.000 mPas bei 25 °C) (erhältlich unter dem Namen Siliconöl AK 1.000.000 bei Wacker-Chemie GmbH), gelöst in Lösemittel Tetrahydrofuran, in einem Mengenverhältnis AK zu THF von 1 zu 20, in flüssiger, feinstverteilter Form durch Verdüsen über eine Einstoffdüse (Druck 20 bar), schrittweise zugefügt. Die so beladene KIESELSÄURE wird bei 100 °C während insgesamt 4 h vom Lösemittel THF befreit, und wird anschließend bei einer Verweilzeit von 2 Stunden bei einer Temperatur von 300 °C in einem Reaktor zur Reaktion gebracht, unter Zuleitung von $N_2$ unter 15-fachem Gasaustausch während der Reaktionszeit. Erhalten wird ein hydrophobes weißes KIESELSÄURE-Pulver mit exzellentem Silyliergrad. Daten in Tabelle 1.

Vergleichsbeispiel V1, nicht erfindungsgemäß

In einer diskontinuierlichen Apparatur werden bei einer Temperatur von 25 °C unter Inertgas $N_2$ zu 100 g hydrophiler KIESELSÄURE, mit einer Feuchte < 1 Gew.% und einem HCl Gehalt < 100 ppm und mit einer spezifischen Oberfläche von 300 $m^2$/g (gemessen nach der BET Methode nach DIN 66131 und 66132) (erhältlich unter dem Namen WACKER HDK T30 bei Wacker-Chemie GmbH, Burghausen, D), 50 g Trimethylsiloxy-endständiges PDMS (Viskosität: 1000 mPas bei 25 °C) (erhältlich unter dem Namen Siliconöl AK 1000 bei Wacker-Chemie GmbH), gelöst in Lösemittel Tetrahydrofuran, in einem Mengenverhältnis AK zu THF von 1 zu 3, in flüssiger, feinstverteilter Form durch Verdüsen über eine Einstoffdüse (Druck 20 bar), schrittweise zugefügt. Die so beladene KIESELSÄURE wird bei 100 °C während insgesamt 3 h vom Lösemittel THF befreit, und wird anschließend bei einer Verweilzeit von 2 Stunden bei einer Temperatur von 300 °C in einem $N_2$-überlagerten Reaktor zur Reaktion gebracht, unter Zuleitung von $N_2$ unter 15-fachem Gasaustausch während der Reaktionszeit. Erhalten wird ein schlecht hydrophobes weißes KIESELSÄURE-Pulver mit nur mäßigem Silyliergrad. Daten in Tabelle 1.

Vergleichsbeispiel V2, nicht erfindungsgemäß

In einer diskontinuierlichen Apparatur werden bei einer Temperatur von 25 °C unter Inertgas $N_2$ zu 100 g hydrophiler KIESELSÄURE, mit einer Feuchte < 1 Gew.% und einem HCl Gehalt < 100 ppm und mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 15 g Octamethylcyclotetrasiloxan, in flüssiger, feinstverteilter Form durch Verdüsen über eine Einstoffdüse (Druck 20 bar), zugefügt. Die so beladene KIESELSÄURE wird bei einer Verweilzeit von 2 Stunden bei einer Temperatur von 300 °C in einem $N_2$-überlagerten Reaktor zur Reaktion gebracht. Erhalten wird ein schlecht hydrophobes weißes KIESELSÄURE-Pulver mit nur mäßigem Silyliergrad. Daten in Tabelle 1.

Beispiel 4

In einer kontinuierlichen Apperatur werden bei einer Temperatur von 120 °C unter Inertgas $N_2$ zu einem Massestrom von 1000 g/h an hydrophiler KIESELSÄURE, mit einer Feuchte < 1 Gew.% und einem HCl Gehalt < 100 ppm und mit einer spezifischen Oberfläche von 300 $m^2$/g (gemessen nach der BET Methode nach DIN 66131 und 66132) (erhältlich unter dem Namen WACKER HDK T30 bei Wacker-Chemie GmbH, Burghausen, D), 200 g/h Hydroxyl-endständiges PDMS (mittlere Kettenlänge 14 DMS-Einheiten, Viskosität: 40 mPas bei 25 °C) in flüssiger, feinstverteilter Form durch Verdüsen über eine Einstoffdüse (Druck 10 bar) zugefügt. Die so beladene KIESELSÄURE wird anschließend bei einer Verweilzeit von 2 Stunden bei einer Temperatur von 300 °C zur Reaktion gebracht. Anschließend wird unter mechanischem Rühren und Begasen mit $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit exzellentem Silyliergrad. Daten in Tabelle 1.

Beispiel 5

In einer kontinuierlichen Apparatur werden bei einer Temperatur von 120 °C unter Inertgas $N_2$ zu einem Massestrom von 1000 g/h an hydrophiler KIESELSÄURE, mit einer Feuchte < 1 Gew.% und einem HCl Gehalt < 100 ppm und mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 150 g/h Hydroxyl-endständiges PDMS (mittlere Kettenlänge 14 DMS-Einheiten, Viskosität: 40 mPas bei 25 °C) in flüssiger, feinstverteilter Form durch Verdüsen über eine Einstoffdüse (Druck 10 bar) zugefügt. Die so beladene KIESELSÄURE wird anschließend bei einer Verweilzeit von 2 Stunden bei einer Temperatur von 300 °C zur Reaktion gebracht. Anschließend wird unter mechanischem Rühren und Durchführen von $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit exzellentem Silyliergrad. Daten in Tabelle 1.

Nichterfindungsgemäßes Vergleichsbeispiel V3

In einer kontinuierlichen Apparatur werden bei einer Temperatur von 120 °C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von-200 $m^2$/g (gemessen nach der BET Methode nach DIN 66131 und 66132) (erhältlich unter dem Namen WACKER HDK N20 bei Wacker-Chemie GmbH, Burghausen, D), 150 g/h Hydroxyl-endständiges PDMS (mittlere Kettenlänge 14 DMS-Einheiten, Viskosität: 40 mPas bei 25 °C) in flüssiger, feinstverteilter Form durch Verdüsen über eine Einstoffdüse (Druck 10 bar) zugefügt. Die so beladene KIESELSÄURE wird anschließend bei einer Verweilzeit von 2 Stunden bei einer Temperatur von 100 °C zur Reaktion gebracht. Anschließend wird unter mechanischem Rühren und Begasung mit $N_2$ mit < 0,5 cm/s Gasgeschwindigkeit bei einer Temperatur von 150 °C 30 Min lang gereinigt. Erhalten wird ein nur mäßig hydrophobes weißes KIESELSÄURE-Pulver mit schwachem Silyliergrad. Daten in Tabelle 1.

Beispiel 6

In einer kontinuierlichen Apparatur werden bei einer Temperatur von 120 °C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 125 m$^2$/g (gemessen nach der BET Methode nach DIN 66131 und 66132) (erhältlich unter dem Namen WACKER HDK S13 bei Wacker-Chemie GmbH, Burghausen, D), 60 g/h Hydroxyl-endständiges PDMS (mittlere Kettenlänge 15 DMS-Einheiten, Viskosität: 40 mPas bei 25 °C) in flüssiger, feinstverteilter Form durch Verdüsen über je eine Einstoffdüse (Druck 10 bar) zugefügt. Die so beladene KIESELSÄURE wird bei einer Verweilzeit von 2 Stunden bei einer Temperatur von 300 °C zur Reaktion gebracht. Anschließend wird unter mechanischem Rühren und Begasen mit $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit exzellentem Silyliergrad. Daten in Tabelle 1.

Beispiel 7

In einer kontinuierlichen Apparatur werden bei einer Temperatur von 120 °C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 50 m$^2$/g (gemessen nach der BET Methode nach DIN 66131 und 66132) (erhältlich unter dem Namen WACKER HDK D05 bei Wacker-Chemie GmbH, Burghausen, D), 30 g/h Hydroxyl-endständiges PDMS (mittlere Kettenlänge 15 DMS-Einheiten, Viskosität: 40 mPas bei 25 °C) in flüssiger, feinstverteilter Form durch Verdüsen über je eine Einstoffdüse (Druck 10 bar) zugefügt. Die so beladene KIESELSÄURE wird bei einer Verweilzeit von 2 Stunden bei einer Temperatur von 300 °C zur Reaktion gebracht. Anschließend wird unter mechanischem Rühren und Begasen mit $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit exzellentem Silyliergrad. Daten in Tabelle 1.

Beispiel 8

In einer kontinuierlichen Apparatur werden bei einer Temperatur von 300 °C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 200 m$^2$/g (gemessen nach der BET Methode nach DIN 66131 und 66132) (erhältlich unter dem Namen WACKER HDK N20 bei Wacker-chemie GmbH, Burghausen, D), 150 g/h Hydroxyl-endständiges PDMS (mittlere Kettenlänge 14 DMS-Einheiten, Viskosität: 40 mPas bei 25 °C) in flüssiger, feinstverteilter Form durch Verdüsen über eine Einstoffdüse (Druck 10 bar) zugefügt. Die so beladene KIESELSÄURE wird anschließend bei einer Verweilzeit von 2 Stunden bei einer Temperatur von 300 °C zur Reaktion gebracht. Anschließend wird unter mechanischem Rühren und Begasen mit $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit exzellentem Silyliergrad. Daten in Tabelle 1.

Beispiel 9

In einer kontinuierlichen Apparatur werden bei einer Temperatur von 120 °C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 200 m$^2$/g (gemessen nach der BET Methode nach DIN 66131 und 66132) (erhältlich unter dem Namen WACKER HDK N20 bei Wacker-Chemie GmbH, Burghausen, D), 150 g/h Trimethylsiloxy-endständiges PDMS (mittlere Kettenlänge 40 DMS-Einheiten, Viskosität: 20 mPas bei 25 °C, erhältlich bei Wacker-Chemie GmbH unter dem Namen AK 20) in flüssiger, feinstverteilter Form durch Verdüsen über eine Einstoffdüse (Druck 10 bar) zugefügt. Die so beladene KIESELSÄURE wird anschließend bei einer Verweilzeit von 2 Stunden bei einer Temperatur von 300 °C zur Reaktion gebracht. Anschließend wird unter mechanischem Rühren und Begasen mit $N_2$ mit < 0,5 cm/s Gasgeschwindigkeit bei einer Temperatur von 150 °C 30 Min lang gereinigt. Erhalten wird ein hydrophobes weißes KIESELSÄURE-Pulver mit exzellentem Silyliergrad. Daten in Tabelle 1.

Tabelle 1

Charakteristische Daten zur Beschreibung der erzielten Hydrophobierung der KIESELSÄURE sind in Tabelle 1 zusammengefaßt: Kohlenstoffgehalt (%C) als Maß für die Bedeckung mit Silyliermittel, Ausbeute der Reaktion (%) (berechnet aus dem erwarteten und gefundenen Kohlenstoffgehalt), Restgehalt an nicht silylierten KIESELSÄURE-Silanolgruppen, Test (ja/nein) der Benetzbarkeit mit Wasser (WT), Methanolzahl (MZ), Intensität der Bande der isolierten OH-Valenzschwingung bei 3750 cm$^{-1}$ gemessen mit der DRIFT (diffuse reflectance infrared Fourier transform spectroscopy), Polarität, gemessen via Solvatochromie mit Methylrot in Toluol (MRZ), Homogenität der Struktur der Silyliermittelschicht an der Kieselsäure-Oberfläche gemessen mit Festkörper-$^1$H-NMR (T2-Relaxation) (Anteil frei beweglichen, mobilen Silyliermittels %mobil).

Tabelle 1

| Beispiel | %C | %Ausbeute | %SiOH-Rest | WT | MZ | DRIFT 3750 1/cm | MRZ | %mobil |
|---|---|---|---|---|---|---|---|---|
| | | | | | | | | |
| B1 | 4,0 | 95 | 14 | Nein | 70 | 0 | 5 | <10% |
| B2 | 10,5 | 97 | 7 | Nein | 70 | 0 | 5 | <10% |
| B3 | 7,0 | 94 | 8 | Nein | 75 | 0 | 5 | <10% |
| V1 | 7,1 | 66 | 33 | Teilweise | 50 | 10 | 4 | >30% |
| V2 | 2,4 | 56 | 42 | Teilweise | 50 | 15 | 3 | >30% |
| B4 | 5,1 | 94 | 12 | Nein | 75 | 0 | 5 | <10% |
| B5 | 4,1 | 98 | 11 | Nein | 70 | 0 | 5 | <10% |
| V3 | 3,0 | 72 | 39 | Teilweise | 50 | 20 | 3 | >30% |
| B6 | 1,8 | 97 | 12 | Nein | 70 | 0 | 5 | <10% |
| B7 | 0,9 | 99 | 13 | Nein | 70 | 0 | 5 | <10% |
| B8 | 3,9 | 92 | 10 | Nein | 75 | 0 | 5 | <10% |
| B9 | 4,1 | 96 | 14 | Nein | 70 | 0 | 5 | <10% |

Beschreibung der Analysenmethoden

1. Kohlenstoffgehalt (%C)

- Elementaranalyse auf Kohlenstoff; Verbrennen der Probe bei >1000°C im $O_2$-Strom, Detektion und Quantifizierung des entstehenden $CO_2$ mit IR; Gerät LECO 244

2. Ausbeute der Reaktion (%)

- berechnet aus dem erwarteten, theoretischen Kohlenstoffgehalt %C-theor und dem experimentell gefundenen Kohlenstoffgehalt %C-exp: %Ausbeute = %C-exp/%C-theor*100%

3. Restgehalt an nicht silylierten KIESELSÄURE-Silanolgruppen

- Methode: Säure-Base-Titration der in Wasser/Methanol = 50:50 supendierten Kieselsäure; Titration im Bereich, der oberhalb des pH-Bereichs des isoelektrischen Punktes liegt und unterhalb des pH-Bereichs der Auflösung der Kieselsäure
- unbehandelte Kieselsäure mit 100% SiOH (KIESELSÄURE-Oberflächensilanolgruppen): SiOH-phil = 2 SiOH / nm$^2$
- silylierte Kieselsäure: SiOH-silyl
- Kiesel-Rest-Silanolgehalt: %SiOH = SiOH-silyl/SiOHphil*100%

4. Test (ja/nein) der Benetzbarkeit mit Wasser (WT) :
Einschütteln eines gleichen Volumens der Kieselsäure mit gleichem Volumen an Wasser;

- bei Benetzung (hydrophil) sinkt KIESELSÄURE ein: JA,

  - bei Nicht-Benetzung (hydrophob) schwimmt KIESELSÄURE auf: NEIN,

5. Test (Volumen% MeOH in Wasser) der Benetzbarkeit mit Wasser-Methanol Gemischen = Methanolzahl (MZ) : Einschütteln eines gleichen Volumens der Kieselsäure mit gleichem Volumen an Wasser-Methanol Gemisch

- Start mit 0% Methanol
- bei Nicht-Benetzung schwimmt KIESELSÄURE auf: Gemisch mit einem um 5 Vol% höherem MeOH Gehalt verwenden.
- bei Benetzung sinkt KIESELSÄURE ein: Anteil MeOH (%) in Wasser gibt MZ

6. Intensität der Bande der isolierten OH-Valenzschwingung bei 3750 cm$^{-1}$ gemessen mit der DRIFT (diffuse reflectance infrared Fourier transformation spectroscopy)

- Bezogen auf die Intensität der Bande der unbehandelten Kieselsäure: %SiOH-3750 1/cm = Intensität-silyliert (SiOH-3750 1/cm) / Intensität-hydrophil (SiOH-3750 1/cm) * 100%

7. Polarität, gemessen via Solvatochromie mit Methylrot in Toluol (MRZ)

- Lösung von 20 mg Methylrot in Toluol
- Suspendieren von 0,5 g Kieselsäure in 10 ml toluolischer Methylrotlösung; Visuelle Beurteilung der Farbe der Supension:

  - Violett 0 unbehandelte Kieselsäure
  - Rot-Violett 1
  - Rot 2
  - Rot-Orange 3
  - Orange 4
  - Gelb-Orange 5 vollständig silylierte Kieselsäure

8. Homogenität der Struktur der Silyliermittelschicht an der Kieselsäure-Oberfläche gemessen mit Festkörper-1H-NMR (T2-Relaxation) (Anteil frei beweglichen, mobilen Silyliermittels %mobil).

- Bestimmen der beweglichen (mobil) und adsorbiertunbeweglichen Anteile (immobil) des Silyliermittels auf der Kieselsäure-Oberfläche, bestimmt über die T2-Relaxation der Protonen.
- %mobil = Anteil-mobil/(Anteil-immobil+Anteil-mobil)*100%

## Patentansprüche

1. Verfahren zur Herstellung einer silylierten Kieselsäure, wobei als Basis-(Ausgangs-)-Produkt zur Silylierung eine hydrophile pyrogene Kieselsäure verwendet wird, **dadurch gekennzeichnet, dass** diese Kieselsäure mit einem Organosiloxan aufgebaut aus A Einheiten der Formel (I)

$$(R^1_3SiO_{1/2}) \qquad (I)$$

und B Einheiten der Formeln (IIa-c)

$$(R^1_2SiO_{2/2}), \text{ und/oder} \qquad (IIa)$$

$$(R^1SiO_{3/2}), \text{ und/oder} \qquad (IIb)$$

$$(SiO_{4/2}) \qquad (IIc)$$

silyliert wird,
wobei das Organosiloxan an Si-Atomen 1 oder 2 gebundene Gruppen -X enthalten kann, und
X = OZ, wobei Z ein einwertiger Alkylrest mit 1 - 4 C-Atomen, oder Z = Wasserstoff ist, oder X ein Halogen ist, oder X eine Acetoxygruppe ist, $R^1$ ist ein gegebenenfalls einfach oder mehrfach ungesättigter, einwertiger, gegebenenfalls halogenierter, Kohlenwasserstoffrest mit 1 bis 18 C-Atomen,
und dabei gleich oder verschieden sein kann,
wobei das Organosiloxan die Gruppen $\equiv SiX$ oder $=SiX_2$ in einer Anzahl C aufweisen kann und
für A, B und C gilt:

$$1 \leq B \leq 100 \text{ oder } 750 < B < 10000$$

$$B \geq A + C$$

und für A + C = 0 gilt $10 \leq B \leq 100$ oder $750 < B < 10000$, mit der Maßgabe, dass das Verfahren in einer Atmosphäre mit weniger als 2,5 Vol.% Sauerstoff durchgeführt wird.

2. Verfahren zur Herstellung einer Kieselsäure nach Anspruch 1, **dadurch gekennzeichnet, dass** das Organosiloxan mit der Kieselsäure bei Temperaturen von über 200 °C zur Reaktion gebracht wird.

3. Verfahren zur Herstellung einer Kieselsäure nach einem oder mehreren der Ansprüche 1 oder 2, **dadurch gekennzeichnet, dass** das Organosiloxan über 80 Mol% an $R^1_2SiO_{2/2}$ Einheiten aufweist.

4. Additiv zur Steuerung der Rheologie von flüssigen und pulverförmigen Systemen, **dadurch gekennzeichnet, dass** es eine Kieselsäure hergestellt nach einem der Ansprüche 1-3 enthält.

5. Füllstoff zum Verstärken von Elastomeren, **dadurch gekennzeichnet, dass** er eine Kieselsäure hergestellt nach einem der Ansprüche 1-3 enthält.

6. Toner oder Entwickler, **dadurch gekennzeichnet, dass** er eine Kieselsäure hergestellt nach einem der Ansprüche 1-3 enthält.

## Claims

1. Process for preparing a silylated silica, where a hydrophilic pyrogenic silica is used as the basis (initial) product for silylation, **characterized in that** this silica is silylated with an
organosiloxane composed of A units of the formula (I)

$$(R^1_3SiO_{1/2}) \qquad (I)$$

and B units of the formulae (IIa-c)

$$(R^1_2SiO_{2/2}), \text{ and/or} \qquad (IIa)$$

$$(R^1SiO_{3/2}), \text{ and/or} \qquad (IIb)$$

$$(SiO_{4/2}) \qquad (IIc)$$

where the organosiloxane may comprise 1 or 2 attached groups -X on Si atoms, and
X = OZ, Z being a monovalent alkyl radical having 1-4 carbon atoms, or Z being hydrogen, or X is a halogen, or X is an acetoxy group, $R^1$ is a saturated or mono- or polyunsaturated, monovalent, unhalogenated or halogenated, hydrocarbon radical having from 1 to 18 carbon atoms,
and may be identical or different,
it being possible for the organosiloxane to contain the groups $\equiv SiX$ or $=SiX_2$ in a number C, and
for A, B, and C it is the case that

$$1 \leq B \leq 100 \text{ or } 750 < B < 10\ 000,$$

$$B \geq A + C,$$

and, if A + C = 0, then $10 \leq B \leq 100$ or $750 < B < 10\ 000$, with the proviso that the process is carried out in an atmosphere with less than 2.5% by volume of oxygen.

2. Process for preparing a silica according to Claim 1, **characterized in that** the organosiloxane is reacted with the silica at temperatures of more than 200°C.

3. Process for preparing a silica according to one or more of Claims 1 and 2, **characterized in that** the organosiloxane contains more than 80 mol% of $R^1_2SiO_{2/2}$ units.

4. Additive for controlling the rheology of liquid and pulverulent systems, **characterized in that** it comprises a silica prepared according to one of Claims 1-3.

5. Filler for reinforcing elastomers, **characterized in that** it comprises a silica prepared according to one of Claims 1-3.

6. Toner or developer, **characterized in that** it comprises a silica prepared according to one of Claims 1-3.

**Revendications**

1. Procédé pour la préparation d'une silice silylée, dans lequel on utilise une silice hydrophile pyrogène comme produit de base (de départ) pour la silylation, **caractérisé en ce que** cette silice est silylée avec un organosiloxane à base de A unités de formule (I)

$$(R^1_3SiO_{1/2}) \qquad (I)$$

et B unités des formules (IIa-c)

$$(R^1_2SiO_{2/2}) \text{ et/ou} \qquad (IIa)$$

$$(R^1SiO_{3/2}) \text{ et/ou} \qquad (IIb)$$

$$(SiO_{4/2}) , \qquad (IIc)$$

l'organosiloxane pouvant contenir sur les atomes de Si 1 ou 2 groupes liés -X et
X = OZ, où Z représente un radical alkyle monovalent comprenant 1 à 4 atomes de carbone ou Z = hydrogène ou X représente halogène ou X représente un groupement acétoxy, $R^1$ représente un radical hydrocarboné le cas échéant monoinsaturé ou polyinsaturé, monovalent, le cas échéant halogéné, comprenant 1 à 18 atomes de carbone, et qui en l'occurrence peut être identique ou différent,
l'organosiloxane pouvant présenter les groupements $\equiv SiX$ ou $=SiX_2$ en un nombre C et
les relations suivantes étant d'application pour A, B et C :

$$1 \leq B \leq 100 \text{ ou } 750 < B < 10000$$

$$B \geq A + C$$

et lorsque A + C = 0, $10 \leq B \leq 100$ ou $750 < B < 10000$, à condition que le procédé soit réalisé dans une atmosphère présentant moins de 2,5% en volume d'oxygène.

**2.** Procédé pour la préparation d'une silice selon la revendication 1, **caractérisé en ce qu'**on fait réagir l'organosiloxane avec la silice à des températures supérieures à 200°C.

**3.** Procédé pour la préparation d'une silice selon l'une ou plusieurs des revendications 1 ou 2, **caractérisé en ce que** l'organosiloxane présente plus de 80% en mole d'unités $R^1_2SiO_{2/2}$.

**4.** Additif pour contrôler la rhéologie de systèmes liquides et poudreux, **caractérisé en ce qu'**il contient une silice préparée selon l'une quelconque des revendications 1 à 3.

**5.** Charge pour renforcer des élastomères, **caractérisée en ce qu'**elle contient une silice préparée selon l'une quelconque des revendications 1 à 3.

**6.** Toner ou agent de développement, **caractérisé en ce qu'**il contient une silice préparée selon l'une quelconque des revendications 1 à 3.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686676 A
- EP 1204006 A